# EUROPEAN PATENT APPLICATION

(11) **EP 1 524 290 A1**
(43) Date of publication of application: **20.04.2005**
(21) Application number: 04024155.6
(22) Date of filing: 11.10.2004
(51) Int. Cl.: C08J 3/09, C08K 5/101, D06M 15/643, C04B 41/49, C09K 3/18

(54) **Product and method for water-repellent treatment of surfaces**

(30) Priority: 13.10.2003 IT BO20030593
(71) Applicant: Curvet SPA, 61022 Bottega Di Colbordolo (Pesaro) (IT)
(72) Inventor: Bartolucci, Roberto, 61100 Pesaro (IT); Sensoli, Franco, 61100 Pesaro (IT); Sensoli, Marco, 47837 Montegridolfo (RN) (IT)
(74) Representative: Negrini, Elena

(57) **Abstract**

A product for the water-repellent treatment of surfaces includes at least polymethylhydrogensiloxane diluted in ethyl acetate with a dilution ratio, expressed in weight or in volume, ranging between 2/1000 and 20/1000.

## Description

The present invention relates to the technical field of the surfaces treatments and particularly it refers to a product and to a method for the water-repellent treatment of glassy surfaces, metallic, natural and synthetic stone materials, plastics, resins and similar.

There are known products destined to make water-repellent the external surfaces of windows and glass door to reduce the dirtying caused by the residues left from meteorological water following its adhesion and following evaporation thereof.

A drawback of such known products consists in that, generally, their application requires a thermal treatment to elevated temperature in lack of which the effect water-repellent does not appear or disappear too quickly.

Other drawback consists in the fact that the known products are fit only for glass treatment or a small number of materials.

Further drawback of some known products, consist in their dangerousness and toxicity avoiding their domestic use and by inexpert personnel.

An object of the present invention is to propose a product and a method for the water-repellent treatment suitable for simple, fast and sure application without thermal processes and providing an effective and durable protection against water.

Other object is to propose a product and a method for the water-repellent treatment of many different material such as glassy, metallic, natural and synthetic stone, plastics, resins also reinforced and similar.

The mentioned objects are achieved in accordance with the content of the claims.

The product for the water-repellent treatment of surfaces, object of the present invention, includes polymethylhydrogensiloxane (polimetilidrogensilossano) diluted in ethyl acetate with a dilution ratio, expressed in weight or in volume, ranging between 2/1000 and 20/1000. The product can also include a component, of type used usually for the polymerization of two-components elastomer silicone material, in weight or volume ratio with the ethyl acetate ranging between 1/1000 and 10/1000.

The polymethylhydrogensiloxane is represented in the following formula:

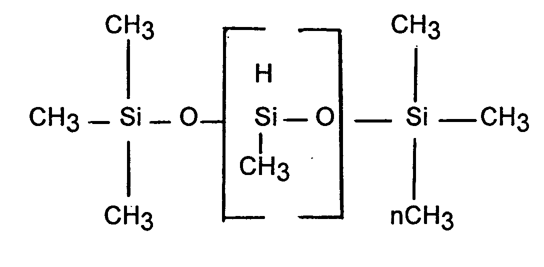

Preferably the dilution ratio of the polymethylhydrogensiloxane in ethyl acetate, express in volume it is around 5/1000 and in the volume ratio of the component for the polymerization respect ethyl acetate is around 2,5/1000 in volume.

The component for the polymerization of silicone elastomer includes siloxanes or platinum siloxanes or siloxanes with small quantities of platinum.

For example, the polymethylhydrogensiloxane consists in the product from Dow Corning ® commercially indicated as Dow Corning 1107 ® Fluid.

It is important to observe that the presence in the product of cited component for the polymerization makes an unexpected effect of carrying out a perfect cross-linking of the polymethylhydrogensiloxane so forming a very strong water-repellent resin without needing any thermal treatment. The elevated dilution in ethyl acetate of the product makes the application and the distribution extremely easy thereof, in a thin continuous layer, on the surface to make water-repellent even if not perfectly smooth or polished.

The elevated fluidity of the product, allows also the application thereof on natural and synthetic polished stones, plastics, gelcoat, strengthen also resins and similar besides on fabrics, leather, hides and paper.

The product application according to the method for water-repellent treatment of surfaces object of the present invention provides to clean the surface to be treated for eliminating possible dirties which can avoid the product adhesion and to apply and to distribute this latter onto the surface to make water-repellent.

Subsequently, after some minute, needed for exsiccation and cross-linking of the product, the film water-repellent is generated preventing the water adhesion let it flowing downwardly without leaving residual.

The product application is carried out by spraying or by an absorbent material impregnated with the product. Such impregnate material is rubbed on the surface for spreading the product.

In alternative the product spreading can be carried out by rubbing with a fabric, with fibers or with a woven not woven and similar.

Particularly the product is suitable for manual applications also in inner home environments being sprayed or applied with a cloth that can also be used for spreading the product on parts made of glass, ceramics, metal and painted shower box, sanitary, coated walls and similar.

It is important to observe that the safety characteristics and facilities in using the product can also advantageously allow its application by housekeepers and unskilled persons in general.

The main advantage of the present invention consists in furnish a product and a method for water-repellent treatment applicable in simple and fast way also without thermal process and providing an effective and durable protection against water.

Further advantage is to furnish a product and a sure method, for the water-repellent treatment for many different material such as glassy, metallic, natural and synthetic stones, plastics, also strengthen resins and the like besides material as woven, leather, hides and paper.

## Claims

1. Product for water-repellent treatment of surfaces **characterized in that** it includes at least polymethylhydrogensiloxane diluted in ethyl acetate with a dilution ratio, by weight or volume, ranging between 2/1000 and 20/1000.

2. Product according to claim 1 **characterized in that** the dilution ratio of the polymethylhydrogensiloxane in ethyl acetate, by volume is preferably about 5/1000.

3. Product according to claim 1 **characterized in that** further includes a component for the polymerization of two-components elastomer silicone material.

4. Product according to claim 3 **characterized in that** the component for the polymerization of silicone elastomer includes siloxane.

5. Product according to claim 3 **characterized in that** the component for the polymerization includes platinum siloxane.

6. Product according to any one of the claims from 3 to 5 **characterized in that** the component for the polymerization is by weight or volume ratio with the ethyl acetate ranging between 1/1000 and 10/1000.

7. Product according to claim 6 **characterized in that** it has a ratio by volume of the component for the polymerization with ethyl acetate preferably about 2,5/1000.

8. Product according to claim 3 **characterized in that** the polymethylhydrogensiloxane consists of Dow Corning 1107 ® from Dow Corning ®.

9. Method for water-repellent treatment of surfaces with the product of any one of claims from 1 to 8 **characterized in that** it includes:
- to clean a surface to be treated;
- to apply the product to the surface;
- to spread the product onto the surface;
- to wait for the exsiccation of the product before exposing the treated surface to the water action.

10. Method according to claim 9 **characterized in** applying the product by spraying or rubbing on the surface an absorbent material impregnated with the product.

11. Method according to claim 9 **characterized in** spreading the product by rubbing with a material made of fabric, fiber, woven not woven and similar.

12. Method according to the claim 9 **characterized in** applying and spreading the product by hand.
